# EUROPEAN PATENT APPLICATION

(11) **EP 1 767 834 A1**
(43) Date of publication of application: **28.03.2007**
(21) Application number: 05765199.4
(22) Date of filing: 30.06.2005
(51) Int. Cl.: F16J 9/14, F02F 5/00, F16J 9/06

(54) **PISTON RING FOR INTERNAL COMBUSTION ENGINE**

(30) Priority: 05.07.2004 JP 2004198417
(71) Applicant: Kabushiki Kaisha Riken, Tokyo 102-8202 (JP)
(72) Inventor: YAMADA, Masaki, c/o Kabushiki Kaisha Riken, Kashiwazaki-shi Niigata 9458555 (JP)
(74) Representative: Kador & Partner
(86) International application number: PCT/JP2005/012043
(87) International publication number: WO 2006/003976

(57) **Abstract**

A piston ring for an internal combustion engine is provided that is capable of preventing friction occurrence due to opening and closing of the butt ends of the piston ring, and maintaining low friction even in a cylinder having a tapered-shape.

A piston ring 10 according to the present invention is **characterized in that** a chamfering 22 whose width in the peripheral direction L1 is larger than the width in the radial direction L2 is formed at an edge portion 20 between a butt end edge surface 16 and an outer peripheral surface 18. With this configuration, oil film formation can be facilitated, and friction due to opening and closing movements of butt ends in the peripheral direction can be reduced.

## Description

### TECHNICAL FIELD

This invention relates to a piston ring installed in a piston for an internal combustion engine, and more particularly to a combined oil ring.

### TECHNICAL BACKGROUND

Cylinder bores for internal combustion engines are typically deformed into a tapered-shape in which the bore diameter of its upper portion is increased due to temperature differences between upper portion and lower portion, or clamping force by bolts. Therefore, it is considered that, when a piston reciprocates on inner wall of a cylinder bore, butt ends of a piston ring installed in the piston move to open and close in order to follow the changes in bore diameters. Shapes of the butt ends may be right-angled butt ends (straight), oblique butt ends (angle), and stepped butt ends (step), and these butt ends are commercially used. On outer peripheral edge of the butt end portions, a round chamfering or a 45-degree chamfering is performed as disclosed in "Internal combustion engines -- Small diameter piston rings -- Part 4: General specifications", JIS B 8032, established on December 20, 1998, pages 14 to 15.

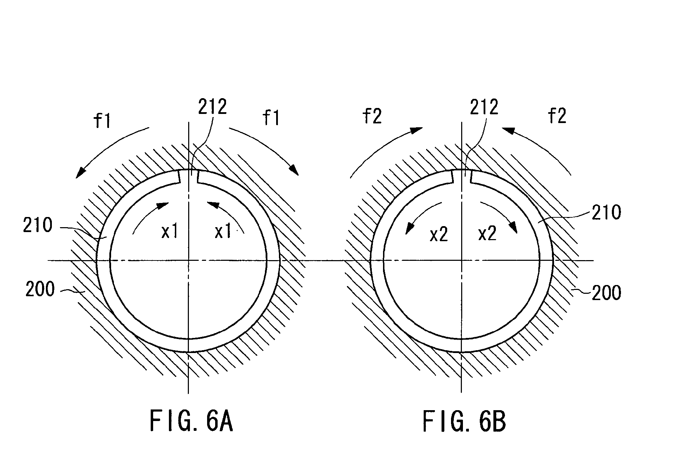

As shown in Fig. 6A, when butt ends 212 of a piston ring 210 move in directions x1 to narrow their distance, friction f1 is produced on the outer peripheral surface of the ring. On the other hand, as shown in Fig. 6B, when the butt ends 212 of the piston ring 210 move in directions x2 to widen their distance, friction f2 is produced on the outer peripheral surface of the piston ring. Therefore, when butt ends of a piston ring move in directions to close, that is, when the piston moves in a direction in which its bore diameter becomes smaller, friction f1 that pushes the piston ring outward is added, and thus sliding friction increases.

### DISCLOSURE OF THE INVENTION

### PROBLEMS TO BE SOLVED BY THE INVENTION

As such, conventional piston rings have an influence of friction especially in the vicinity of butt ends where contact pressure becomes high. This influence may cause uneven wear in the vicinity of the butt ends, and, in a worst case, cause seizing.

The present invention, therefore, aims to provide a piston ring for an internal combustion engine that is capable of preventing friction occurrence due to opening and closing of the butt ends of the piston ring, and maintaining low friction even in a tapered shaped cylinder.

### MEANS TO SOLVE THE PROBLEMS

A piston ring according to the present invention is characterized in that a surface whose width in the peripheral direction, viewed in the axial direction, is larger than the width in its radial direction is provided at the edge portion between a butt end of a piston ring and an outer peripheral surface (butt end outer peripheral edge). In general, on the edge portion, a 45-degree chamfering or a round chamfering is performed to prevent chipping. According to the present invention, it is found that oil film formation is facilitated and friction is reduced by performing a chamfering on a butt end outer peripheral edge portion such that the width of the portion in the peripheral direction becomes larger than the width in the radial direction to make the outer peripheral sliding surface side continue at a slight angle.

The present invention is applicable either to a compression ring or an oil ring. Especially in a case applied to a combined oil ring, significant friction reduction can be obtained. Examples of oil rings include a combined oil ring that comprises an oil ring body consisting of upper and lower rail portions and a web that connects the upper and lower rail portions, and a coil expander installed in a groove on the inner periphery side of the oil ring body; and a combined oil ring that comprises a pair of side rails and a spacer expander that supports the side rails. The present invention is applicable also to other known oil rings. In a case applied to the former combined oil ring, a surface whose width in the peripheral direction is larger than the width in the radial direction is formed at butt end outer peripheral edge portions of the upper and lower rail portions of the oil ring body, and in a case applied to the latter combined oil ring, a surface whose width in the peripheral direction is larger than the width in the radial direction is formed at butt end outer peripheral edge portions of the side rails, and thus advantages of the present invention can be obtained.

The ratio, L2/L1, between the width in the peripheral direction L1 and the width in the radial direction L2 of the surface formed in a piston ring and a combined oil ring is preferably in a range of 0.1 to 0.5, and more preferably 0.15 to 0.35. In general, the surface is formed by chamfering.

### ADVANTAGES OF THE INVENTION

In a piston ring according to the present invention, at the edge portion between an outer peripheral surface and a butt end edge surface, a surface whose width in the peripheral direction is larger than the width in the radial direction is formed such that the connection between a sliding surface and a butt end edge surface becomes smooth, and thus oil film is easily formed. As a result, even in a case where upper portion and lower portion have different bore diameters, friction in the peripheral direction due to the opening and closing movement of the butt ends can be reduced, and low friction can be maintained.

### BRIEF DESCRIPTION OF THE DRAWINGS

Fig. 1 A is a perspective view of the vicinity of butt ends of a piston ring according to the present invention, and Fig. 1B is a plan view thereof.
Fig. 2A is a schematic view of oil film formation when a conventional piston ring is installed, and Fig. 2B is a schematic view of oil film formation when a piston ring of the present invention is installed.
Fig. 3A is a cross sectional view showing a combined oil ring with a coil expander, and Fig. 3B is an enlarged view showing an oil ring body of a combined oil ring of the present invention.
Fig. 4 is a schematic view showing an apparatus used for measuring outer peripheral loads.
Fig. 5 shows results of the measurement of outer peripheral loads.
Fig. 6A and 6B illustrate opening and closing movements of butt end portions of a piston ring in a tapered-shaped bore diameter.

### PREFERRED EMBODIMENTS TO IMPLEMENT THE INVENTION

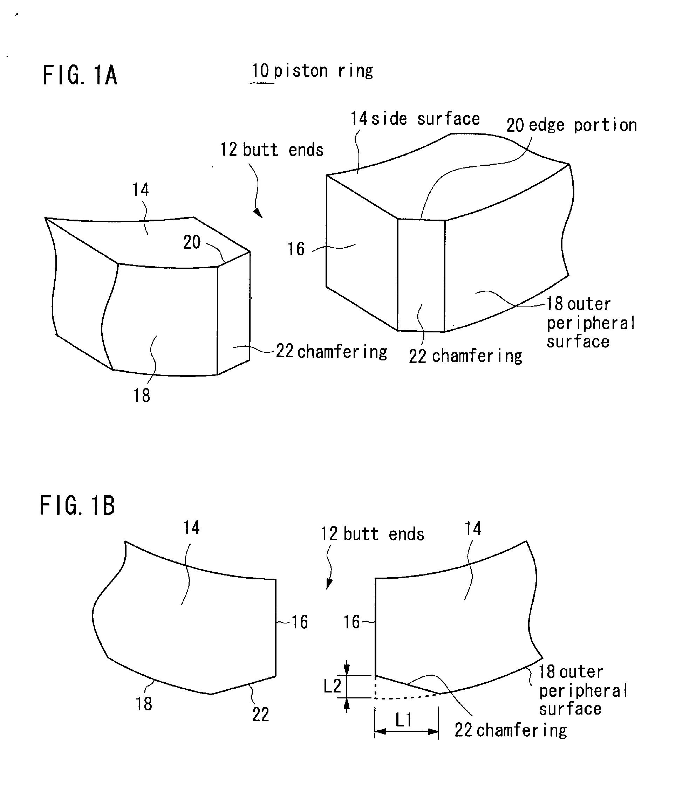

Preferred embodiments of the present invention will be now described in detail, referring to drawings. Fig. 1A shows a perspective view of the vicinity of butt ends of a piston ring of the present invention, and Fig. 1B shows a plan view thereof. A piston ring 10 comprises butt ends 12 formed to have a certain gap in the peripheral direction. The butt ends 12 are right-angled butt ends (straight), and a butt end edge surface 16 is right angle with respect to a side surface 14 of the piston ring 10.

At an edge portion 20 where an outer peripheral surface 18 and the butt end edge surface 16 of the piston ring intersect, chamfering 22 is provided such that, viewed in the axial direction, the width in the peripheral direction L1 becomes larger than the width in the radial direction L2.

By forming such chamfering 22, the sliding surface (outer peripheral surface) and the butt end edge surface 16 are smoothly continued so that oil film is easily formed between the piston ring outer peripheral surface and the cylinder inner peripheral surface at the time of occurrence of hydraulic pressure.

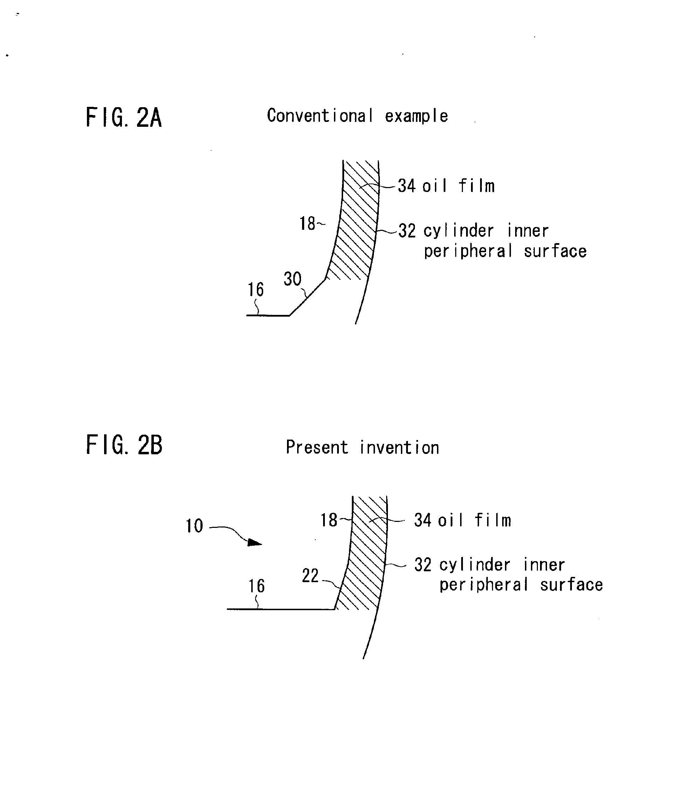

Fig. 2A and Fig. 2B show schematic views of oil film formation at the time of occurrence of hydraulic pressure when a piston ring on which a 45-degree chamfering is provided is installed and when a piston ring of the present invention is installed, respectively. In the case of a 45-degree chamfering 30 formed on a conventional piston ring shown in Fig. 2A, the slope between the outer peripheral surface 18 and the butt end edge surface 16 is steep (they are not in a relation where the width in the peripheral direction L1 is larger than the width in the radial direction L2), and thus oil tends to escape at the chamfering portion 30 when the piston ring moves downward in the axial direction, and thus oil film 34 formed between the outer peripheral surface 18 and a cylinder inner peripheral surface 32 becomes thin.

In contrast, in the piston ring 10 of the present invention, a chamfering portion 22 continues at a slight angle from the outer peripheral surface 18 toward the butt end edge surface 16, and thus the oil film 34 is easily formed even on the chamfering portion 22, and a thicker film than the conventional example is formed.

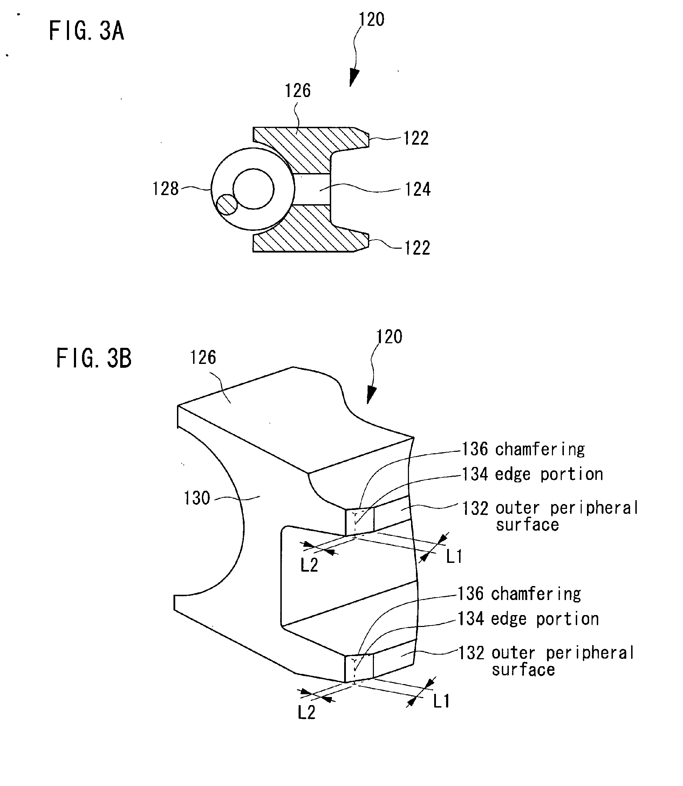

Next, taking a combined oil ring with a coil expander as an example, the present invention will be described. As shown in Fig. 3A, a combined oil ring 120 with a coil expander comprises an oil ring body 126 consisting of upper and lower rail portions 122 provided above and below in the axial direction, and a web that connects the upper and lower rail portions 122 and, in the web, plural oil windows 124 are formed in the peripheral direction; and a coil expander 128 that is installed in a groove in the inner peripheral side of the oil ring body 126 and pushes the oil ring body outwardly in the radial direction.

Fig. 3B shows a partially enlarged view of an oil ring body of a combined oil ring with a coil expander of the present invention. At edge portions 134 between a butt end edge surface 130 of the upper and lower rail portions 122 of the oil ring body 126 and outer peripheral surfaces 132, chamfering 136 is provided such that its width in the peripheral direction L1 is larger than its width in the radial direction L2, viewed in the axial direction. As described above, this facilitates oil film formation as compared with a conventional 45-degree chamfering and thus oil film is formed sufficiently even in the vicinity of the butt end portion. Therefore, friction occurrence due to closing movement of the butt ends is prevented and lower friction can be achieved.

The width of the chamfering portion in the peripheral direction L1 is preferably 0.10 to 0.30 mm. The width in the radial direction L2 is preferably 0.02 to 0.10 mm, and more preferably 0.03 mm to 0.07 mm. The surface provided at the butt end outer peripheral edge portion 134 may be a flat surface, however, by making it a smoothly curved surface, oil film formation may be further facilitated, and more excellent friction reduction can be obtained.

### EMBODIMENTS

Oil ring bodies were fabricated by winding a martensite stainless steel wire rod having a cross section of Fig. 3A to have a bore diameter. The oil ring bodies had a tension Ft of 10 N, a ring nominal diameter of 75.0 mm, a thickness in the radial direction of the ring body of 1.5 mm, and an axial width of 1.5 mm. At edge portions between a butt end edge surface of the upper and lower rail portion and outer peripheral surfaces of the obtained oil ring bodies, chamfering was performed by using a belt grinding equipment. The width of chamfering portion in the peripheral direction L1 was 0.2 mm for all samples, and the width in the radial direction L2 was varied in a range of between 0.02 and 0.15 mm to fabricate various oil ring bodies. In addition, as a comparison sample, an oil ring body was also fabricated on which a 45-degree chamfering is performed such that both of the width in the peripheral direction L1 and the width in the radial direction L2 are 0.2 mm. After combining each of the oil ring bodies with a coil expander having a coil diameter d = 1.060 mm, and installing it to a piston, the piston was reciprocated by using a tapered-shaped cylinder, and then outer peripheral loads were measured.

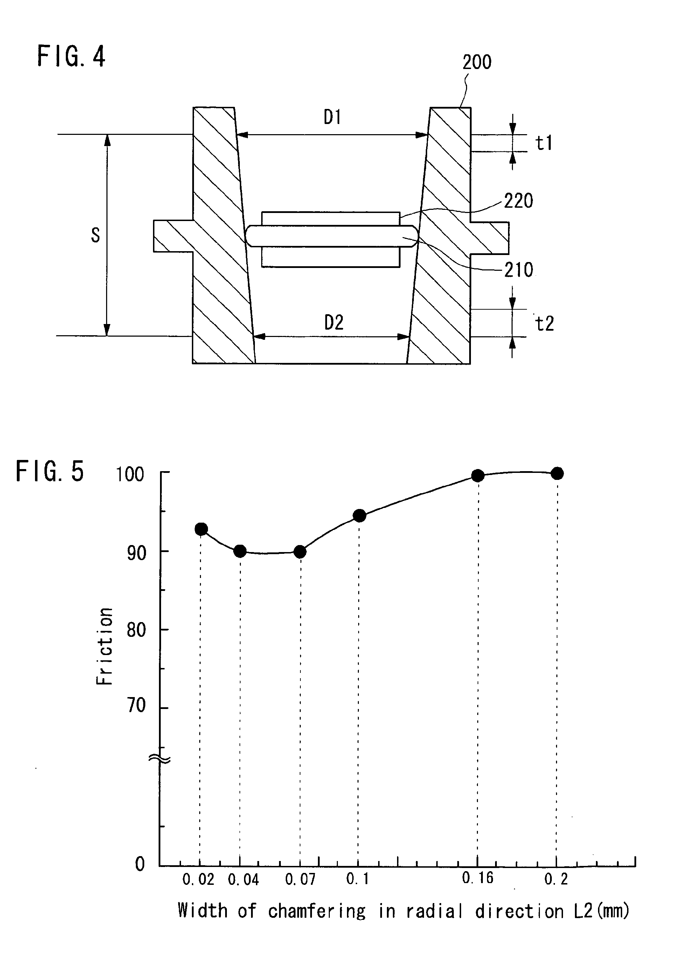

Fig. 4 shows a schematic view of an apparatus used for the measurement. The stroke S of the piston was set to 40 mm, and load sensors ( load washers ) were embedded at top dead center and bottom dead center, and then cylinder contact pressure was measured. The bore diameter D1 at the top dead center of the piston was ϕ 93.03 mm, and the bore diameter D2 at the bottom dead center was **ϕ** 92.08 mm.

With the combined oil ring of the comparison example, there was a significant tendency of friction to increase in the vicinity of the bottom dead center. Fig. 5 shows results of the ratio of the maximum values of friction measured for each embodiment, when the maximum value of friction of the comparison example ( the width in the radial direction was 0.2 mm ) is defined as 100. It is observed that friction is reduced as compared with the comparison example, by making the radial direction width of the chamfering of the butt end outer peripheral edge portion smaller than of the width in the peripheral direction, and making it in a sagging shape i.e. a smooth outer periphery. It is observed that friction is reduced especially in a case where the width of the chamfering portion in the radial direction is in a range of 0.02 mm to 0.10 mm, and more significant friction reduction is obtained in a case of 0.03 mm to 0.07 mm.

While the preferred embodiments of the present invention have been described in detail, the invention is not limited to these specific embodiments, and various modifications and changes could be made without departing from the inventive scope which is defined by the following claims.

### INDUSTRIAL APPLICABILITY

A piston ring according to the present invention may be used in a piston for internal combustion engines for automobiles, vessels, two-wheeled vehicles, or the like.

### DESCRIPTION OF REFERENCES

- 10:: piston ring
- 12:: butt ends
- 14:: side surface
- 16, 130:: butt end edge surface
- 18, 132:: outer peripheral surface
- 20, 134:: edge portion
- 22, 136:: chamfering
- 120:: combined oil ring
- 126:: oil ring body
- L1:: width in the peripheral direction
- L2:: width in the radial direction

Fig. 1 A, Fig. 1 B
   - 10:: piston ring
   - 12:: butt ends
   - 14:: side surface
   - 18:: outer peripheral surface
   - 20:: edge portion
   - 22:: chamfering
Fig. 2A, Fig. 2B
   Conventional example
   - 32: cylinder inner peripheral surface
   - 34: oil film
   Present invention
Fig. 3B
   - 132:: outer peripheral surface
   - 134:: edge portion
   - 136:: chamfering
Fig. 5
   Friction
   Width of chamfering in radial direction L2 (mm)

## Claims

1. A piston ring for an internal combustion engine, **characterized in that** a surface is formed at an edge portion between a butt end edge surface and an outer peripheral surface of the piston ring such that the width of the surface in the peripheral direction is larger than the width in the radial direction.

2. A combined oil ring comprising an oil ring body consisting of upper and lower rail portions and a web that connects the upper and lower rail portions, and a coil expander installed in a groove in the inner peripheral side of oil ring body, **characterized in that** a surface whose width in the peripheral direction is larger than the width in the radial direction is formed at an edge portion between a butt end edge surface of the upper and lower rail portion and an outer peripheral surface.

3. A combined oil ring comprising a pair of side rails and a spacer expander that supports the side rails, **characterized in that** a surface whose width in the peripheral direction is larger than the width in the radial direction is provided at an edge portion between a butt end edge surface and an outer peripheral surface of the side rails.

4. The piston ring for an internal combustion engine of claim 1, the ratio, L2/L1, between the width in the peripheral direction L1 and the width in the radial direction L2 of said surface is in a range of 0.1 to 0.5.

5. The combined oil ring of either one of claim 2 or 3, **characterized in that** the ratio, L2/L1, between the width in the peripheral direction L1 and the width in the radial direction L2 of said surface is in a range of 0.1 to 0.5.
